# EUROPEAN PATENT SPECIFICATION

(11) **EP 0 477 192 B1**
(45) Date of publication and mention of the grant of the patent: **25.09.1996**
(21) Application number: 90907217.5
(22) Date of filing: 01.05.1990
(51) Int. Cl.: C08K 3/22, C08L 23/06, C08L 31/04

(54) **FLAME RETARDANT POLYMER COMPOSITIONS**
FLAMMHEMMENDE POLYMERZUSAMMENSETZUNGEN
COMPOSITIONS POLYMERES IGNIFUGES

(30) Priority: 11.05.1989 GB 8910874
(43) Date of publication of application: 01.04.1992
(73) Proprietor: BOWTHORPE-HELLERMANN LIMITED, Crawley West Sussex RH10 2RZ (GB)
(72) Inventor: COLE, Edward, Bridgend Mid Glamorgan CF37 5UT (GB)
(74) Representative: Austin, Hedley William
(86) International application number: GB9000673
(87) International publication number: WO9013594

(56) References cited:
- EP-A- 0 100 066
- DE-A- 3 633 056
- GB-A- 2 107 720
- PATENT ABSTRACTS OF JAPAN, Vol. 10, No. 194, (C-358) (2250), 8 July 1986; & JP-A-6136343 (Hitachi Cable Ltd) 21 February 1986

## Description

The present invention is concerned with flame retardant polymer compositions and, in particular polymer compositions containing mineral flame retardants.

The use of halogenated organic additives to impart flame retardancy to polymer compositions is well established. Formulations containing such additives suffer from the drawback that they generate corrosive gases and high levels of smoke during pyrolysis. As a result, mineral fillers such as hydroxides of aluminium and magnesium are increasingly being used as flame retardants and smoke suppressants. DE 3533056 A1 discloses flame retardant compositions which comprise a mixture of polyethylene, and ethylene - vinyl acetate co-polymer and aluminium or magnesium hydroxide as flame retardant. These mineral fillers are, however, comparatively inefficient as flame retardants, and for this reason loadings in excess of 35% by weight are usually required to give useful flammability.

With such highly filled formulations, mechanical properties such as the elongation at break, flexibility and impact strength are detrimentally affected. This deleterious influence is, in part, generally attributed to uneven dispersion of the additive and a poor particle-polymer interfacial linkage. Surface-treated mineral flame retardants and processing aids (e.g. stearic acid and low molecular weight polyalkene lubricants) have given moderate improvement in some properties. EP-A-0100066 discloses filled thermoplastic compositions having enhanced elongation obtained by blending ethylene interpolymers such as ethylene - vinyl acetate and polyethylene, a plasticiser, surfactant and a filler which may include alumina trihydrate, which is desirable when flame retardant or low smoke blends are required. In curable formulations, such additives may play a role in the cross-linking reaction.

We have now found that by using certain polymeric dispersants, a cross-linked formulation may be effectively flame retarded with very high loadings (for example 60% by weight) of inorganic flame retardants without serious loss of tensile elongation properties. Surprisingly, such formulations also retain much of their flexibility and softness.

According to the present invention there is provided a curable, flame retardant polymer composition which comprises a blend of polyethylene and an ethylene-vinyl acetate copolymer having a hydrated mineral flame retardant dispersed therein, the composition further containing an oligomeric polyester resin dispersant. The oligomeric polyester dispersant is typically a material commercially available from I.C.I. Speciality Chemicals under the trade name HYPERMER FP1. The amount of the polyester is typically 1-10% by weight (based on the total filler content), such as about 5% on the same basis, and the polyester typically has an acid number of 55 to 90mg KOH/gram and a specific gravity at 25°C of 0.85 to 1.1.

The polyethylene present in the composition according to the invention is generally such that it has a density of less than 0.93 grams per cubic centimetre; the polyethylene may be a linear low density polyethylene or a more contentional low density polyethylene. The ethylene-vinyl acetate copolymer typically has a vinyl acetate content not greater than 28% by weight. Either the polyethylene or the ethylene-vinyl acetate copolymer may contain a minor amount of one or more non-deleterious comonomers.

Typically, the polymer blend constitutes 10-60% by weight of the entire composition.

The hydrated mineral flame retardant present in the composition according to the invention is typically aluminium hydroxide (aluminium trihydrate), optionally together with magnesium hydroxide. When magnesium hydroxide is present, it is preferably present in an amount of 10 to 20% by weight, based on the total weight of the composition.

The flame retardant may be coated with a processing aid, such as stearic acid. The aluminium hydroxide typically has a median particle size of from 0.6 to 1 µm (such as about 0.7 µm). It preferably has a specific surface area of at least 3 cubic metre per gram (for example 7 cubic metre per gram) as measured by means of Strohlein area meter.

Preferably, the magnesium hydroxide has a crystallite size of 0.6-0.8 µm, with a particle surface area not greater than 8 cubic metre per gram (as measured by the Brunauer Emmett Teller, or BET, method). The total proportion of flame retardant present in the composition is generally from 30 to 80% by weight (based on the total weight of the composition); a preferred proportion is 40 to 65% on the same basis.

The composition according to the invention may additionally contain additives such as antioxidants, U.V. stabilisers, lubricants, anti-hydrolysis stabilisers, carbon black and pigments. The nature and amount of such ingredients depends on the particular application of the composition.

The composition according to the invention may be blended by any suitable conventional means, for example, by mixing the components in a twin-screw extruder, a two roll mill, or a Buss KC-kneader. The resultant blend, after pelletising, may then be processed into tubes, sheets or three-dimensional articles, by extrusion or injection moulding.

The resultant artefact may be thermally cured, or cured by exposure to high energy radiation such as an electron beam or gamma radiation. When high energy radiation is used, the dose is typically in the range of 5 x 10⁴ - 30 x 10⁴ Gy. The curable composition may contain a cross-linking agent, such as an organic peroxide (for example, dicumyl peroxide) in the polymeric composition. Such a peroxide may be used alone or in conjunction with a co-curing agent, such as a multi-functional compound, for example, triallyl cyanurate, diallylphthalate or glycol dimethacrylate. To facilitate cross-linking during radiation, 0.2-5% by weight of a polyfunctional vinyl or allyl compound, such as triallyl cyanurate or glycol dimethacrylate, may be incorporated in the composition.

If desired, the composition may be further chemically cross-linked by the use of a polymer base onto which a silane has been grafted.

The cross-linked artefact obtained from the composition according to the invention may then be converted to a heat-unstable form, typically by heating the cross-linked heat stable artefact to about 120 to 135°C, deforming to the desired configuration and then cooling whilst in the deformed state. In use, the heat-unstable article can be recovered onto a substrate by heating sufficiently to soften the material.

A typical use of the composition according to the invention is for the protection of electrical and fibre optic cables where stringent flame resistance properties may be required. Examples of this application include the use of injection moulded articles for terminating the free ends of cables and the use of extruded tubes as conduits or as heat-recoverable sleeves.

A further possible use is for sealing of joints or damaged regions of a cable. In this application a suitably formulated composition may be processed to give a heat-unstable sheet. This can then be wrapped around the joint, or damaged cable, and recovered to provide an environmental seal. Alternatively, an extruded tube may be cut along its length to give a cylindrical sheet which is then recoverable over a cable joint.

In the aforementioned applications, artefacts made from compositions according to the invention are characterised by exceedingly low flammability, low corrosive gas evolution and smoke emission. In addition the products of pyrolysis have relatively low toxic potency.

The following examples, in which all parts and percentages are by weight, illustrate the invention.

### EXAMPLE 1

| Ingredient | Function | % |
|---|---|---|
| LLDPE (available from Dow Chemical under the trade name Dowlex 2552) | Polymeric base | 10.0 |
| Ethylene-vinyl acetate with a vinyl acetate content of 28% (available from Atochem under the trade name Evathane 28-05 and 28-420) | Polymeric base | 22 |
| Carbon Black (available from Carbot Plastic Ltd, under the trade name Plastlak PE1371). | U.V. Screen | 2.5 |
| Polyester oligomer (available from I.C.I. Speciality Chemicals under the trade name Hypermer FPI). | Dispersant | 1 |
| Aluminium trihydrate (available from B.A. Chemicals under the trade name of BACO SF7 S3A) | Flame Retardant | 60 |
| Antioxidant (Irganox 1010 available from Ciba Geigy) | Thermal Stabiliser | 1 |
| Polycarbodiimide (available from Bayer U.K. Ltd under the trade name Staboxal P) | Hydrolytic Stabiliser | 0.5 |
| Dicumylperoxide (available from AKZO Chemie under the trade name Perkadox PC). | Cross-linking agent | 1.5 |
| Calcium Stearate (available from Durham Chemicals Ltd) | Lubricant | 1.0 |
| Diallylphthalate (available from B.P. Chemicals Ltd) | Co-agent | 0.5 |

The ingredients were first dry blended in a ribbon blender. The polymers were mixed with the dispersant for approximately half a minute and then the flame retardant and calcium stearate added and mixed for a further 1 minute. The remainder of the components were added and mixed for an additional 1 minute. The resulting blend was then melt-mixed in a Buss KO-kneader. Extruded strands were subsequently granulated; the granules pressed into a plaque and heat cured at 175°C in a picture frame mould. The results obtained on testing the plague are shown in Table 1.

### EXAMPLE 2

Example 1 was repeated except that 10% by weight of magnesium hydroxide was used in place of aluminium trihydrate. The magnesium hydroxide used was available from Kyowa Chemical Industry Co. Ltd (under the trade name Kisuma SB). Properties of the plaque made using this composition are given in Table 1.

### EXAMPLE 3

Example 2 was repeated except that the peroxide was replaced by triallyl cyanurate. A plaque made from this composition was cured by gamma radiation until the dose received was 10 x 10⁴ Gy. The properties of the resulting article are given in Table 1.

### EXAMPLE 4

Example 2 was repeated except that the linear low density polyethylene was replaced with a low density grade available from B.P. Chemicals under the trade name of BPD 2145. The properties for this composition, determined on a compression moulded plaque, are given in Table 1.

| Property | Example | | | |
|---|---|---|---|---|
| | 1 | 2 | 3 | 4 |
| Tensile Strength MPa (to ASTM D412) | 9 | 10 | 9 | 9 |
| | | | | |
| % Elongation at break (to ASTM D412) | 340 | 450 | 340 | 330 |
| | | | | |
| Stiffness Pa (Cantilever Beam bend to ASTM D2240) | 1.172 x 10⁸ | 1.32 x 10⁸ | 1.33 x 10⁸ | 1.46 x 10⁸ |
| | | | | |
| 2% Secant modulus (MPa) | 61 | 84 | 98 | 95 |
| | | | | |
| Resistance to fluids | | | | |
| 1. Hydraulic oil | | | | |
| (Def. Stan. 91-48/1) | | | | |
| Tensile Strength (MPa) | 4.0 | 4.5 | 3.8 | 5.0 |
| after 24 hr 50°C immersion | | | | |
| % Elongation at break | 300 | 340 | 320 | 300 |
| after 24hr 50°C immersion | | | | |
| | | | | |
| 2. 1,1,1 trichlorethane | | | | |
| Tensile Strength (MPa) | 4.0 | 5.0 | 4.5 | 5.5 |
| after 24 hr 23°C immersion | | | | |
| % Elongation at break | 150 | 330 | 310 | 280 |
| after 24 hr 23°C immersion | | | | |
| | | | | |
| Limiting oxygen index (to BS 2782 Pt 1 method 141) | 29 | 32 | 31 | 32.5 |
| | | | | |
| Toxicity index (to NES 713) | 1.4 | 1.9 | 2.1 | 1.7 |
| | | | | |
| Temperature index (to NES 715) | 240 | 330 | 300 | 340 |

## Claims

1. A curable flame retardant polymer composition which comprises a blend of polyethylene and an ethylene-vinyl acetate copolymer having a hydrated mineral flame retardant dispersed therein characterised in that said composition further contains an oligomeric polyester resin dispersant.

2. A composition according to claim 1, in which the polyester resin is present in an amount of 1-10% by weight, based on the total filler content.

3. A composition according to claim 1 or 2, in which the polyethylene has a density less than 0.93 grams per cubic centimetre.

4. A composition according to any of claims 1 to 3, in which the ethylene-vinyl acetate copolymer has a vinyl acetate content of not greater than 28% by weight.

5. A composition according to any of claims 1 to 4, in which the polymer blend constitutes 10-60% by weight of the entire composition.

6. A composition according to any of claims 1 to 5, in which the hydrated mineral flame retardant is aluminium hydroxide.

7. A composition according to claim 6, wherein said aluminium hydroxide has a median particle size of 0.6 to 1 µm.

8. A composition according to any of claims 1 to 7, which further comprises magnesium hydroxide.

9. A composition according to claim 8, wherein said magnesium hydroxide has a crystallite size of 0.6 - 0.8 µm.

10. A composition according to any of claims 1 to 9, in which the total proportion of flame retardant present is 40 to 65% by weight, based on the total weight of the composition.

11. A cross-linked artefact produced from a composition according to any of claims 1 to 10.

12. A process of producing a cross-linked artefact comprising converting a cross-linked artefact obtained from a composition according to any of claims 1 to 10 to a heat unstable form by heating the cross-linked heat stable artefact to a temperature above 120 degrees Celsius, deforming said artefact to the desired configuration and then cooling said artefact whilst the latter is in the deformed state.

13. A process according to claim 12, wherein said artefact is an injection moulded product for terminating the free end of an electrical or fibre optic cable, or an extruded tube.

## Patentansprüche

1. Härtbare flammhemmende Polymerzusammensetzung, enthaltend ein Gemisch aus Polyethylen und einem Ethylen-Vinylacetat-Copolymer mit einem darin dispergierten flammhemmenden Mittel in Form eines hydratisierten Minerals, dadurch gekennzeichnet, daß die Zusammensetzung ferner ein Dispergiermittel in Form eines oligomeren Polyesterharzes enthält.

2. Zusammensetzung nach Anspruch 1, worin das Polyesterharz in einer Menge von 1 bis 10 Gew.-%, bezogen auf den gesamten Füllstoffgehalt, vorliegt.

3. Zusammensetzung nach Anspruch 1 oder 2, worin das Polyethylen eine Dichte von weniger als 0,93 Gramm pro Kubikzentimeter aufweist.

4. Zusammensetzung nach einem der Ansprüche 1 bis 3, worin das Ethylen-Vinylacetat-Copolymer einen Vinylacetatgehalt von nicht höher als 28 Gew.-% aufweist.

5. Zusammensetzung nach einem der Ansprüche 1 bis 4, worin das Polymergemisch 10 bis 60 Gew.-% der gesamten Zusammensetzung ausmacht.

6. Zusammensetzung nach einem der Ansprüche 1 bis 5, worin das flammhemmende Mittel in Form eines hydratisierten Minerals Aluminiumhydroxid ist.

7. Zusammensetzung nach Anspruch 6, worin das Aluminiumhydroxid eine mittlere Teilchengröße von 0,6 bis 1 µm aufweist.

8. Zusammensetzung nach einem der Ansprüche 1 bis 7, die ferner Magnesiumhydroxid enthält.

9. Zusammensetzung nach Anspruch 8, worin das Magnesiumhydroxid eine Kristallitgröße von 0,6 bis 0,8 µm aufweist.

10. Zusammensetzung nach einem der Ansprüche 1 bis 9, worin der gesamte Anteil an flammhemmendem Mittel 40 bis 65 Gew.-%, bezogen auf das Gesamtgewicht der Zusammensetzung, beträgt.

11. Vernetztes Kunstprodukt, hergestellt aus einer Zusammensetzung gemäß einem der Ansprüche 1 bis 10.

12. Verfahren zum Herstellen eines vernetzten Kunstprodukts, wobei ein vernetztes Kunstprodukt, das aus einer Zusammensetzung nach einem der Ansprüche 1 bis 10 erhalten worden ist, durch Erhitzen des vernetzten wärmebeständigen Kunstprodukts auf eine Temperatur über 120°C, Verformen des Kunstprodukts in die gewünschte Struktur und dann Abkühlen des Kunstprodukts, während es sich in dem verformten Zustand befindet, in eine wärmeunbeständige Form überführt wird.

13. Verfahren nach Anspruch 12, worin das Kunstprodukt ein Spritzgußprodukt für den Abschluß des freien Endes eines elektrischen Kabels oder eines optischen Faserkabels oder eines extrudierten Rohres ist.

## Revendications

1. Composition polymère ignifugée durcissable, constituée d'un mélange de polyéthylène et d'un copolymère d'acétate d'éthylène-vinyle, contenant un minéral hydraté ignifuge dispersé, caractérisée en ce que ladite composition contient de plus un dispersant en résine polyester oligomère.

2. Composition selon la revendication 1, dans laquelle la résine polyester est présente à hauteur de 1-10% en poids, par rapport au contenu total du remplisseur.

3. Composition selon la revendication 1 ou 2, dans laquelle le polyéthylène a une densité inférieure à 0,93 gramme par centimètre cube.

4. Composition selon l'une quelconque des revendications 1 à 3, dans laquelle le copolymère d'acétate d'éthylène-vinyle a une teneur en acétate de vinyle ne dépassant pas 28% en poids.

5. Composition selon l'une quelconque des revendications 1 à 4, dans laquelle le mélange de polymères constitue 10-60% en poids de la composition totale.

6. Composition selon l'une quelconque des revendications 1 à 5, dans laquelle le minéral hydraté ignifuge est l'hydroxyde d'aluminium.

7. Composition selon la revendication 6, dans laquelle ledit hydroxyde d'aluminium a une taille médiane de particules de 0,6 à 1 µm.

8. Composition selon l'une quelconque des revendications 1 à 7, comprenant en outre de l'hydroxyde de magnésium.

9. Composition selon la revendication 8, dans laquelle ledit hydroxyde de magnésium a une taille de cristallite de 0,6-0,8 µm.

10. Composition selon l'une quelconque des revendications 1 à 9, dans laquelle la proportion totale de produit ignifuge présent est de 40 à 65% en poids, par rapport au poids total de la composition.

11. Artefact réticulé produit à partir d'une composition selon l'une quelconque des revendications 1 à 10.

12. Procédé de production d'un artefact réticulé comprenant la conversion d'une composition conforme à l'une quelconque des revendications 1 à 10 en une forme thermolabile par chauffage de l'artefact réticulé à une température supérieure à 120°C, la déformation dudit artefact à la configuration désirée et le refroidissement dudit artefact pendant que ce dernier est à l'état déformé.

13. Procédé selon la revendication 12, dans lequel ledit artefact est un produit moulé par injection pour terminer l'extrémité libre d'un câble électrique ou d'une fibre optique, ou un tube extrudé.
